# FASCICULE DE BREVET EUROPEEN

(11) **EP 3 970 575 B1**
(45) Date de publication et mention de la délivrance du brevet: **03.09.2025**
(21) Numéro de dépôt: 21195656.0
(22) Date de dépôt: 09.09.2021
(51) Int. Cl.: A47J 31/36

(54) **MACHINE À CAFÉ AUTOMATIQUE MUNIE D'UN DISPOSITIF D'ÉVACUATION DE MOUTURE DE CAFÉ**
AUTOMATISCHE KAFFEEMASCHINE MIT EINER VORRICHTUNG ZUM ENTFERNEN DES KAFFEEMEHLS
AUTOMATIC COFFEE MACHINE EQUIPPED WITH A DEVICE FOR DRAINING COFFEE GROUNDS

(30) Priorité: 17.09.2020 FR 2009438
(43) Date de publication de la demande: 23.03.2022
(73) Titulaire: SEB S.A., 69130 Ecully (FR)
(72) Inventeur: LE GOUEFF, Ronan, 53000 LAVAL (FR); MAUNOURY, Damien, 53470 CHALONS-DU-MAINE (FR)
(74) Mandataire: SEB Développement

(56) Documents cités:
- EP-A1- 0 468 915
- EP-A1- 1 059 055
- DE-A1- 102011 053 905
- DE-C1- 19 647 385
- JP-A- 2012 050 528

## Description

La présente invention se rapporte au domaine technique général des machines à café automatiques comportant un groupe d'infusion muni d'une chambre d'infusion alimentée en mouture de café pour préparer une boisson.

Il est connu du document EP1827182 une machine à café automatique comportant un groupe d'infusion qui comprend une chambre d'infusion munie d'une ouverture supérieure destinée à recevoir de la mouture de café et une surface de récupération de mouture agencée au niveau de l'ouverture supérieure. Le groupe d'infusion comporte un piston presseur mobile entre une position haute de retrait dans laquelle la mouture peut être introduite dans la chambre d'infusion et une position basse de tassage dans laquelle le piston presseur est agencé dans la chambre d'infusion pour tasser la mouture et former une galette de mouture après l'infusion. Le groupe d'infusion comporte un dispositif d'expulsion de la galette de mouture qui est muni d'un bras éjecteur animé d'un mouvement alternatif au-dessus de l'ouverture supérieure pour évacuer la galette de mouture.

Ainsi, de la mouture sèche qui n'est pas bien dirigée dans la chambre d'infusion lors de l'opération de remplissage de la chambre d'infusion ou de la mouture humide qui se sépare de la galette de mouture lors de l'opération d'éjection se dépose sur la surface de récupération. Dans ce document, le bras éjecteur comporte une extrémité de stabilité en appui sur la surface de récupération qui ne nettoie pas complétement la surface de récupération lors de son mouvement alternatif au-dessus de l'ouverture supérieure. En conséquence, de la mouture stagne sur la surface de récupération, ce qui peut poser des problèmes d'hygiène. De plus, lors du déplacement de la machine à café automatique, la mouture qui stagne sur la surface de récupération peut tomber sur les dispositifs environnants et occasionner des disfonctionnements

De plus, certaines machines à café automatiques comportent, en plus du broyeur qui permet de produire la mouture de café, un dispositif d'insertion d'une dose de mouture. En fonctionnement, on constate que davantage de mouture sèche se dépose sur la surface de récupération avec un cycle d'insertion de mouture avec un tel dispositif qu'avec un broyeur. Ainsi, davantage de mouture peut s'accumuler sur la surface de récupération dans le temps.

Il est connu du document JP2012050528 une machine à café automatique munie d'un dispositif d'évacuation de mouture de café.

Le but de la présente invention est de remédier aux inconvénients précités et de proposer une machine à café automatique qui présente un fonctionnement sûr en termes de fiabilité et d'un point de vue sanitaire.

Un autre but de la présente invention est de proposer une machine à café automatique qui présente une conception simple et qui soit économique à mettre en œuvre.

Ces buts sont atteints avec une machine à café automatique comportant les caractéristiques de la revendication 1 ci-jointe.

On comprend que la surface de récupération de mouture s'étend radialement vers l'extérieur de l'ouverture supérieure.

On comprend par une surface de récupération de mouture agencée au niveau de l'ouverture supérieure que la surface de récupération de mouture récupère la mouture sèche qui n'est pas bien dirigée dans la chambre d'infusion lors de l'opération de remplissage de la chambre d'infusion.

Ainsi, la lèvre souple balaye en raclant la surface de récupération de mouture lors du mouvement alternatif du bras éjecteur au-dessus de l'ouverture supérieure et évacue complétement la mouture sèche qui n'est pas bien dirigée dans la chambre d'infusion lors de l'opération de remplissage de la chambre d'infusion et/ou la mouture humide qui se sépare de la galette de mouture lors de l'opération d'éjection. En conséquence, la surface de récupération de mouture est constamment nettoyée et propre, notamment pour ne pas créer de problème d'hygiène lié à des développement de moisissures sur de la mouture résiduelle. Par lèvre souple, on comprend que la lèvre est réalisée en un matériau élastomère.

La surface de récupération de mouture comporte une surface horizontale et l'au moins une lèvre souple comporte une portion horizontale destinée à nettoyer la surface horizontale.

Ainsi, la mouture, notamment la mouture sèche qui n'est pas bien dirigée dans la chambre d'infusion lors de l'opération de remplissage de la chambre d'infusion, est retenue de manière stable sur la surface horizontale avant d'être évacuée par la portion horizontale de la lèvre souple.

La surface de récupération de mouture comporte une surface verticale qui s'étend depuis la surface horizontale et l'au moins une lèvre souple comporte une portion verticale destinée à nettoyer la surface verticale.

Ainsi, la mouture ne peut pas s'échapper latéralement lors du mouvement alternatif de la lèvre souple au-dessus de l'ouverture supérieure. La surface horizontale et la surface verticale forment un coin qui piège la mouture pour que la lèvre souple l'évacue vers une zone de récupération, plus particulièrement un bac de récupération. En conséquence, la mouture tombée sur la surface de récupération ne peut tomber sur les dispositifs environnants, ce qui garantit la fiabilité de la machine à café automatique.

Avantageusement, le bras éjecteur est mobile en rotation et le bras éjecteur comporte une extrémité d'entrainement qui coopère avec une came solidaire du piston presseur et une extrémité libre qui comporte l'organe de raclage.

Ainsi, l'organe de raclage situé à l'extrémité du bras éjecteur parcourt une grande course à chaque mouvement alternatif de balayage et peut nettoyer une grande surface.

Avantageusement, la lèvre souple comporte une portion de fléchissement formant une zone de flexion programmée.

Ainsi, la portion de fléchissement de la lèvre souple est dimensionnée pour se déformer majoritairement dans cette portion lorsqu'elle balaye la surface de récupération de mouture.

De préférence, l'organe de raclage comporte un socle solidaire du bras éjecteur à partir duquel s'étend la lèvre souple et la lèvre souple comporte deux renforts latéraux, la portion de fléchissement étant agencée entre le socle et les deux renforts latéraux.

Ainsi, lors du balayage de la surface de récupération de mouture, la lèvre souple fléchit préférentiellement dans la portion de fléchissement tout en gardant une portion rigide au niveau des renforts latéraux.

De manière avantageuse, les deux renforts latéraux comportent respectivement des extensions qui limitent le fléchissement de la lèvre souple au niveau de la portion de fléchissement.

Ainsi, la lèvre souple ne se déforme pas trop et applique un effort de raclage sur la surface de récupération de mouture suffisant pour une bonne efficacité de nettoyage.

De préférence, le groupe d'infusion comporte une chaudière qui porte la surface de récupération de mouture à une température supérieure à 130 degrés, l'organe de raclage étant réalisé en un matériau souple supportant une telle température, notamment le silicone ou le polytétrafluoroéthylène.

Une telle disposition permet de garantir un fonctionnement fiable de l'organe de raclage dans le temps.

Avantageusement, la machine à café automatique comporte un broyeur à grains et un dispositif d'insertion d'une dose de mouture, la mouture introduite dans la chambre d'infusion par l'ouverture supérieure étant issue soit du broyeur à grains, soit du dispositif d'insertion d'une dose de mouture.

Une telle disposition permet de préparer successivement deux cafés différents, un avec la mouture d'un premier type issue du café du broyeur et un avec la mouture d'un deuxième type issue du dispositif d'insertion d'une dose de mouture.

De préférence, la machine à café automatique comporte au moins une goulotte d'amenée de mouture et la goulotte d'amenée est agencée au-dessus de la surface de récupération de mouture.

Ainsi, la mouture sèche qui n'est pas bien dirigée dans la chambre d'infusion lors de l'opération de remplissage tombe par gravité sur la surface de récupération de mouture.

Avantageusement, le groupe d'infusion comporte un vérin hydraulique d'entrainement du piston presseur.

De préférence, la machine à café automatique comporte un conduit de réception de la mouture évacuée de la surface de récupération par l'organe de raclage.

Ainsi, la mouture évacuée de la surface de récupération par l'organe de raclage est dirigée dans un conduit de réception qui débouche par exemple au-dessus d'un bac de récupération que l'utilisateur peut retirer pour le vider.

Avantageusement, le dispositif d'expulsion comporte un plateau mobile à l'intérieur de la chambre d'infusion entre une position basse de travail dans laquelle il forme le fond de la chambre d'infusion et une position haute d'expulsion dans laquelle il est agencé au niveau de l'ouverture supérieure de la chambre d'infusion pour amener la galette de mouture dans une zone de balayage du bras éjecteur.

De manière avantageuse, l'organe de raclage ne coopère pas avec le plateau lorsqu'il est dans la position haute d'expulsion.

La température du plateau étant élevée, la durée de vie de l'organe de raclage est ainsi préservée.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique munie d'un groupe d'infusion selon un mode particulier de réalisation de l'invention.
[Fig. 2] La figure 2 illustre une vue en perspective du groupe d'infusion de la machine à café automatique illustrée sur la figure 1.
[Fig. 3] La figure 3 illustre une vue du dessus du groupe d'infusion illustré sur la figure 2.
[Fig. 4] La figure 4 illustre une vue en perspective du dessus du bras éjecteur du groupe d'infusion illustré sur la figure 2.
[Fig. 5] La figure 5 illustre une vue partielle en perspective du dessous du bras éjecteur illustré sur la figure 4.
[Fig. 6] La figure 6 illustre une vue en coupe selon la ligne VI-VI du bras éjecteur illustrée sur la figure 4.
[Fig. 7] La figure 7 illustre une vue en coupe selon la ligne VII-VII de la machine à café automatique illustrée sur la figure 1.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

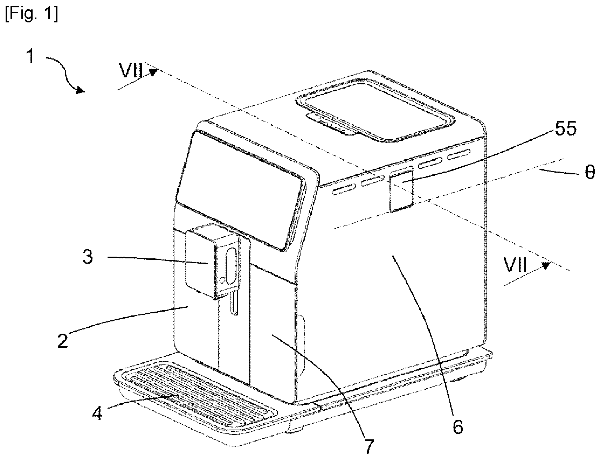

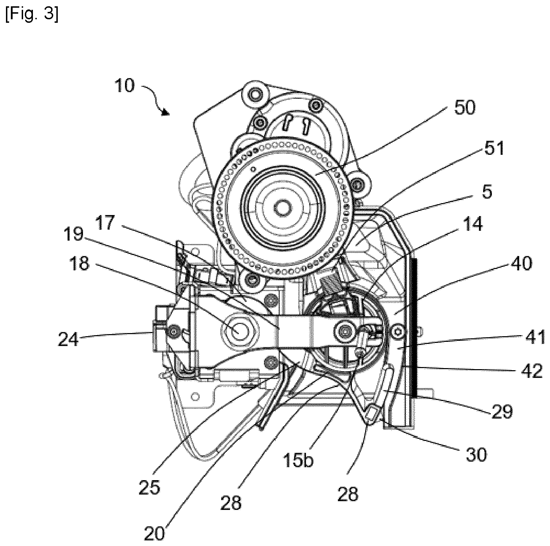

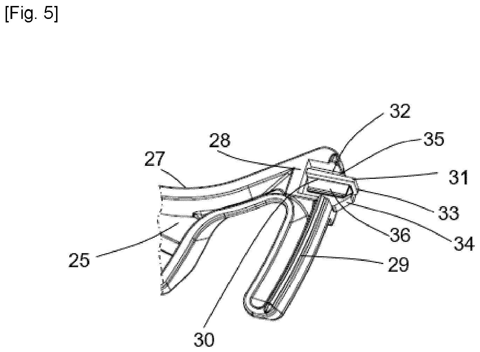

Dans l'exemple de réalisation représenté aux figures 1 à 7, une machine à café automatique 1 comporte un réservoir 2 formant une alimentation en eau froide, un groupe d'infusion 10 muni d'une chambre d'infusion 12 alimentée en mouture de café par un broyeur à grains 50 et d'un dispositif d'insertion 55 d'une dose de mouture. La machine à café automatique 1 comporte également une tête de distribution 3 du café.

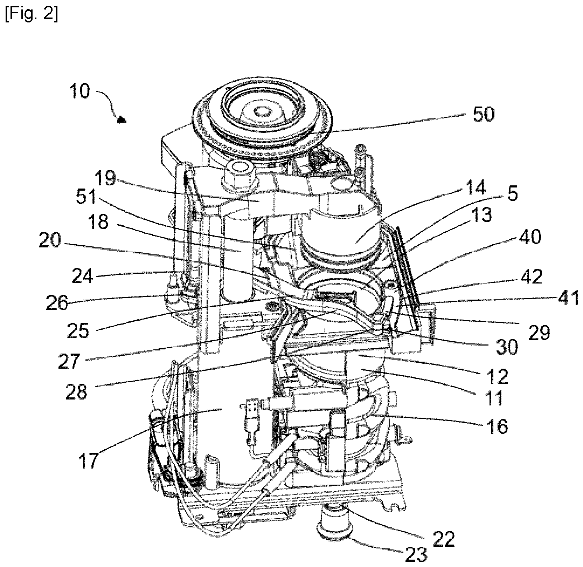

Tel que visible aux figures 1 et 2, le groupe d'infusion 10 comprend un corps 11 s'étendant longitudinalement selon un axe vertical et renfermant la chambre d'infusion 12 munie d'une ouverture supérieure 13. La chambre d'infusion 12 est susceptible de recevoir un piston presseur 14 monté déplaçable selon un axe vertical au moyen d'un mécanisme d'entraînement. Le groupe d'infusion 10 comporte également une pompe électrique (non illustrée sur les figures), destinée à créer une circulation d'eau et d'infusion, ainsi qu'une chaudière 16 destinée à chauffer l'eau pour la préparation du café dans la chambre d'infusion 12. Le corps 11 est agencé latéralement à un vérin hydraulique 17 à simple effet comportant une tige supérieure 18 (Fig. 2) portant un bras 19 formant potence et dont l'extrémité libre est reliée au piston presseur 14, les courses du piston presseur 14 et du vérin hydraulique 17 étant ainsi effectuées selon des directions parallèles. Le piston presseur 14 parcourt une course entre une position haute de retrait pour laquelle il est situé au-dessus de la chambre d'infusion 12 et une position basse de tassage pour laquelle il pénètre dans la chambre d'infusion 12 par l'ouverture supérieure 13. Dans la position basse de tassage, le piston presseur 14 comprime la mouture de café admise dans la chambre d'infusion 12 pour former une galette de mouture comprimée.

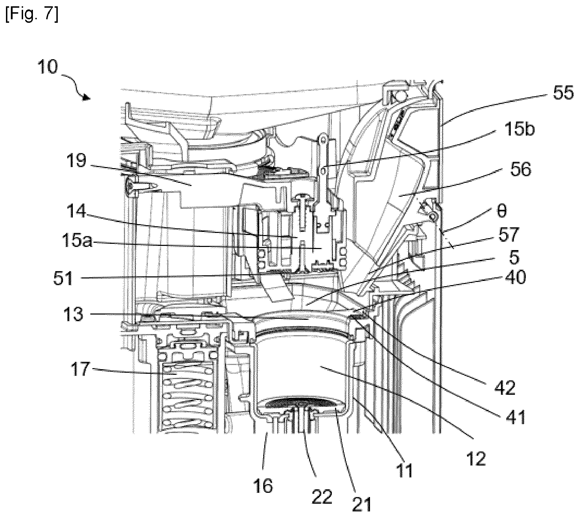

La chaudière 16 et le corps 11 sont formés en une seule pièce de matériau conducteur de la chaleur qui contient une résistance électrique chauffante, des canaux de passage et de chauffage de l'eau dont des entrées sont reliées, via la pompe électrique au réservoir 2 d'eau froide et dont des extrémités débouchent sur le fond de la chambre d'infusion 12. Le piston presseur 14 présente un conduit de passage 15a (Fig.7) de l'infusion débouchant par un orifice de sortie 15b, tandis que la pompe électrique est adaptée à créer une circulation d'eau ascendante dans la chambre d'infusion 12 vers l'orifice de sortie 15b lorsque le piston presseur 14 ferme la chambre d'infusion 12. Un tel groupe d'infusion 10 a, par exemple, été décrit plus en détail dans la demande de brevet PCTWO99/12456.

L'orifice de sortie 15b du conduit de passage 15a de l'infusion du piston presseur 14 est relié à un conduit agencé dans la tête de distribution 3 par un tuyau souple (non représenté sur les figures) pour former une sortie de café. La tête de distribution 3 est agencée au-dessus d'un repose tasse 4 et elle est montée mobile en translation verticale pour permettre à un utilisateur d'ajuster la position de la sortie de café à la hauteur de la tasse.

Le groupe d'infusion 10 comporte un dispositif d'expulsion 20 de la galette de mouture en fin de cycle de préparation d'une boisson infusée. Le dispositif d'expulsion 20 comporte un plateau 21 mobile à l'intérieur de la chambre d'infusion 12 entre une position basse de travail dans laquelle il forme le fond de la chambre d'infusion 12 et une position haute d'expulsion dans laquelle il est agencé au niveau de l'ouverture supérieure 13 de la chambre d'infusion 12. Le dispositif d'expulsion 20 comporte une tige d'éjection 22 qui est relié au plateau 21 mobile et qui traverse la chaudière 16. Le dispositif d'expulsion 20 comporte une pièce de transmission (non illustrée sur les figures) mise en mouvement par le vérin hydraulique 17 qui agit sur une extrémité basse 23 (Fig.2) de la tige d'éjection 22. Ainsi, le mouvement du plateau 21 est assujetti au mouvement du vérin hydraulique 17.

Le dispositif d'expulsion 20 de la galette de mouture du groupe d'infusion 10 comporte un bras éjecteur 25 qui est animé d'un mouvement rotatif alternatif au-dessus de l'ouverture supérieure 13 pour évacuer la galette de mouture lorsque le plateau 21 est dans la position haute d'expulsion. Le bras éjecteur 25 est mobile en rotation autour d'un axe Δ parallèle à un axe du vérin hydraulique 17. Le dispositif d'expulsion 20 comporte une came 24 solidaire du piston presseur 14. La came 24 comporte une partie inclinée et une partie droite qui coopèrent avec une extrémité d'entrainement 26 du bras éjecteur 25. Le bras éjecteur 25 comporte une portion incurvée 27 destinée à entrer en contact avec la galette de mouture pour l'évacuer vers un bac à galettes 7 (Fig.1). La partie inclinée de la came 24 présente un profil qui assure le balayage complet de l'ouverture supérieure 13 par la portion incurvée 27 du bras éjecteur 25. Un tel groupe d'infusion 10 a été décrit plus en détail dans le brevet EP1827182.

Conformément aux figures 2, 3 et 7, le groupe d'infusion 10 comprend une surface de récupération de mouture 40 agencée au niveau de l'ouverture supérieure 13 de la chambre d'infusion 12, au-dessus du corps 11. La surface de récupération de mouture 40 comporte une surface plane 41 qui s'étend radialement à la chambre d'infusion 12, au niveau de l'ouverture supérieure 13. La surface de récupération de mouture 40 comporte une surface verticale 42 qui s'étend vers le haut à partir de la surface plane 41, à distance de l'ouverture supérieure 13.

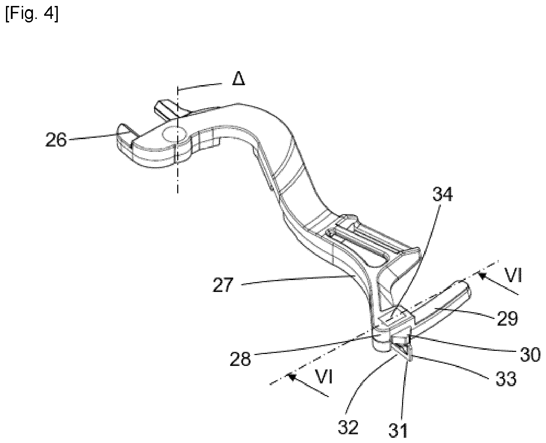

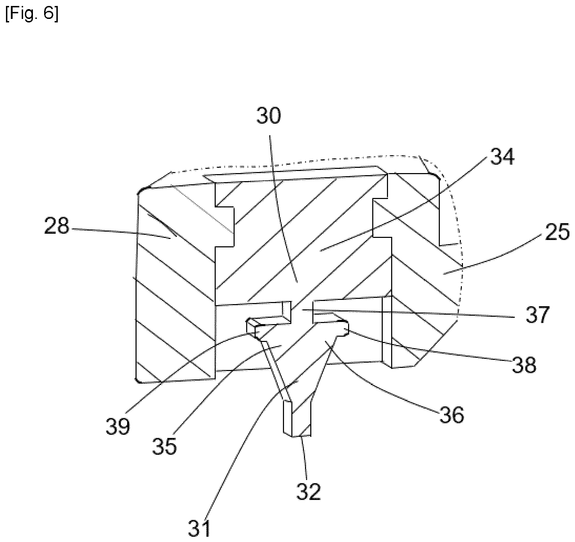

Tel que visible aux figures 4, 5 et 6, le bras éjecteur 25 comporte un organe de raclage 30 de la surface de récupération de mouture 40. L'organe de raclage 30 est agencé à une extrémité libre 28 du bras éjecteur 25, après la portion incurvée 27. La surface de récupération de la mouture 40 est dimensionnée pour être balayée complétement par l'organe de raclage 30. L'organe de raclage 30 comporte une lèvre souple 31 qui comporte une portion horizontale 32 et une portion verticale 33. La portion horizontale 32 coopère avec la surface horizontale 41 et la portion verticale 33 coopère avec la surface verticale 42. L'organe de raclage 30 est réalisé par surmoulage sur l'extrémité libre 28 du bras éjecteur 25. D'autres modes de réalisation sont possibles, notamment le clipsage de l'organe de raclage 30 sur l'extrémité libre 28 du bras éjecteur 25. Conformément à la figure 6, L'organe de raclage 30 comporte un socle 34 solidaire du bras éjecteur 25 à partir duquel s'étend la lèvre souple 31. La lèvre souple 31 comporte deux renforts latéraux 35, 36. La lèvre souple 31 comporte une portion de fléchissement 37 qui est agencée entre le socle 34 et les deux renforts latéraux 35, 36. Les deux renforts latéraux 35, 36 comportent respectivement des extensions 38, 39. En fonction du sens de balayage du bras éjecteur 25, l'extension 38 ou l'extension 39 vient en contact avec le socle 34 pour limiter le fléchissement de la lèvre souple 31 au niveau de la portion de fléchissement 37.

Le bras éjecteur 25 comporte un organe d'appui 29 rigide qui repose sur la surface horizontale 41 aussi bien lorsque le bras éjecteur 25 est à l'arrêt ou lorsque le bras éjecteur 25 effectue un mouvement de balayage. La machine à café automatique 1 comporte un conduit de réception 5 de la mouture évacuée de la surface de récupération de mouture 40 par l'organe de raclage 30. Le conduit de réception 5 débouche au-dessus d'un bac de récupération amovible (non illustré sur les figures)

La surface de récupération de mouture 40 est agencée au niveau de l'ouverture supérieure 13 de la chambre d'infusion 12, au-dessus du corps 11. Ainsi, la chaudière 16 transmet de la chaleur via le corps 11 à la surface de récupération de mouture 40. L'organe de raclage 30 est réalisé en un matériau souple qui résiste à la chaleur, notamment à une température supérieure à 130 degrés.

La chambre d'infusion 12 est alimentée en mouture de café par le broyeur à grains 50 ou le dispositif d'insertion 55 d'une dose de mouture (Fig.7). Le broyeur à grains 50 comporte une goulotte d'amenée 51 de la mouture dirigée vers l'ouverture supérieure 13 et vers la surface de récupération de mouture 40. Le dispositif d'insertion 55 d'une dose de mouture est agencée sur une paroi latérale 6 de la machine à café automatique 1. Le dispositif d'insertion 55 d'une dose de mouture comporte un réservoir doseur 56 qui est mobile en rotation autour d'un axe θ, parallèle à la paroi latérale 6, entre une position de chargement (non illustrée sur les figures) dans laquelle une dose de mouture peut être déposée dans le réservoir doseur 56 et une position de déchargement (Fig.7) dans laquelle la dose de mouture est transférée par gravité vers la chambre d'infusion 12, par l'ouverture supérieure 13. Dans la position de déchargement, le réservoir doseur 56 comporte une extrémité qui forme une goulotte d'amenée 57 de la mouture dirigée vers l'ouverture supérieure 13 et agencée au-dessus de la surface de récupération de mouture 40.

En fonctionnement, l'utilisateur peut lancer un café à partir des grains présents dans le broyeur 50 ou insérer par le dispositif d'insertion 55 une dose de mouture issue de grains de café différents. Dans ces deux cas, lors du transfert de la mouture dans la chambre d'infusion 12, de la mouture sèche peut se déposer sur la surface horizontale 41 de la surface de récupération de mouture 40. Ensuite le vérin hydraulique 17 commence à descendre en entrainant la came 24. La partie inclinée de la came 24 entraine le bras éjecteur 25 dans un premier balayage au-dessus de l'ouverture supérieure 13 de la chambre d'infusion 12 lors duquel l'organe de raclage 30 balaye la surface de récupération de mouture 40, notamment la portion horizontale 32 de la lèvre souple 31 qui balaye la surface horizontale 41 et la portion verticale 33 de la lèvre souple 31 qui balaye la surface verticale 42. Ainsi, la mouture sèche qui s'est déposée sur la surface de récupération de mouture 40 est évacuée dans le conduit de récupération 5. Le vérin hydraulique 17 continue sa course pour amener le piston presseur 14 dans la position basse de tassage pour réaliser la galette de mouture comprimée. Une fois l'infusion réalisée, le vérin hydraulique 17 remonte en entrainant le piston presseur 14 et le plateau 21 dans sa position haute d'expulsion qui amène la galette de mouture au niveau de l'ouverture supérieure 13 de la chambre d'infusion 12. En fin de remontée du vérin hydraulique 17, la partie inclinée de la came 24 entraine le bras éjecteur 25 dans un deuxième balayage, en sens inverse du premier balayage, au-dessus de l'ouverture supérieure 13 de la chambre d'infusion 12 lors duquel le bras éjecteur 25 évacue la galette de mouture vers le bac à galettes 7 (Fig.1). Si de la mouture humide se détache pour aller sur la surface de récupération de mouture 40, l'organe de raclage 30 évacue la mouture humide vers le bac à galettes 7.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie dans les revendications ci-jointes.

Dans une variante de réalisation, l'organe de raclage comporte deux lèvres souples agencées parallèlement.

## Revendications

1. Machine à café automatique (1) comportant un groupe d'infusion (10) qui comprend une chambre d'infusion (12) munie d'une ouverture supérieure (13) destinée à recevoir de la mouture de café lors d'une opération de remplissage et une surface de récupération de mouture (40) agencée au niveau de l'ouverture supérieure (13) et qui récupère la mouture sèche qui n'est pas bien dirigée dans la chambre d'infusion lors de l'opération de remplissage de la chambre d'infusion, ledit groupe d'infusion (10) comportant un piston presseur (14) mobile entre une position haute de retrait dans laquelle la mouture peut être introduite dans ladite chambre d'infusion (12) et une position basse de tassage dans laquelle le piston presseur (14) est agencé dans la chambre d'infusion (12) pour tasser la mouture et former une galette de mouture après l'infusion, ledit groupe d'infusion (10) comportant un dispositif d'expulsion (20) de la galette de mouture qui est muni d'un bras éjecteur (25) animé d'un mouvement alternatif au-dessus de l'ouverture supérieure (13) pour évacuer la galette de mouture, le bras éjecteur (25) comporte un organe de raclage (30) de la surface de récupération de mouture (40), **caractérisée en ce que** ledit organe de raclage (30) comporte au moins une lèvre souple (31) et **en ce que** la surface de récupération de mouture (40) comporte une surface horizontale (41) et une surface verticale (42) qui s'étend depuis la surface horizontale (41), l'au moins une lèvre souple (31) comportant une portion horizontale (32) destinée à nettoyer la surface horizontale (41) et une portion verticale (33) destinée à nettoyer la surface verticale (42).

2. Machine à café automatique (1) selon la revendication 1, **caractérisée en ce que** le bras éjecteur (25) est mobile en rotation et **en ce que** le bras éjecteur (25) comporte une extrémité d'entrainement (26) qui coopère avec une came (24) solidaire du piston presseur (14) et une extrémité libre (28) qui comporte l'organe de raclage (30).

3. Machine à café automatique (1) selon l'une quelconque des revendications 1 à 2, **caractérisée en ce que** la lèvre souple (31) comporte une portion de fléchissement (37) formant une zone de flexion programmée de la lèvre souple (31).

4. Machine à café automatique (1) selon la revendication 3, **caractérisée en ce que** l'organe de raclage (30) comporte un socle (34) solidaire du bras éjecteur (25) à partir duquel s'étend la lèvre souple (31) et **en ce que** la lèvre souple (31) comporte deux renforts latéraux (35, 36), la portion de fléchissement (37) étant agencée entre le socle (34) et les deux renforts latéraux (35, 36).

5. Machine à café automatique (1) selon l'une quelconque des revendications 1 à 4, **caractérisée en ce que** le groupe d'infusion (10) comporte une chaudière (16) qui porte la surface de récupération de mouture (40) à une température supérieure à 130 degrés, l'organe de raclage (25) étant réalisé en un matériau souple supportant une telle température, notamment le silicone ou le polytétrafluoroéthylène.

6. Machine à café automatique (1) selon l'une quelconque des revendications 1 à 5, **caractérisée en ce qu'**elle comporte un broyeur à grains (50) et un dispositif d'insertion (55) d'une dose de mouture, la mouture introduite dans la chambre d'infusion (12) par l'ouverture supérieure (13) étant issue soit du broyeur à grains (50), soit du dispositif d'insertion (55) d'une dose de mouture.

7. Machine à café automatique (1) selon l'une quelconque des revendications 1 à 6, **caractérisée en ce qu'**elle comporte au moins une goulotte d'amenée (51, 57) de mouture et **en ce que** la goulotte d'amenée (51, 57) est agencée au-dessus de la surface de récupération de mouture (40)

8. Machine à café automatique (1) selon l'une quelconque des revendications 1 à 7, **caractérisée en ce qu'**elle comporte un conduit de réception (5) de la mouture évacuée de la surface de récupération de mouture (40) par l'organe de raclage (30).

9. Machine à café automatique (1) selon l'une quelconque des revendications 1 à 8, **caractérisée en ce que** le groupe d'infusion (10) comporte un dispositif d'expulsion (20) de la galette de mouture au niveau de l'ouverture supérieure (13), ledit dispositif d'expulsion (20) comportant un plateau (21) mobile à l'intérieur de la chambre d'infusion (12) entre une position basse de travail dans laquelle il forme le fond de la chambre d'infusion (12) et une position haute d'expulsion dans laquelle il est agencé au niveau de l'ouverture supérieure (13) de la chambre d'infusion (12) pour amener la galette de mouture dans une zone de balayage du bras éjecteur (25).

## Patentansprüche

1. Automatische Kaffeemaschine (1), die eine Brühgruppe (10) aufweist, die eine Brühkammer (12) umfasst, die mit einer oberen Öffnung (13) versehen ist, die dazu bestimmt ist, während eines Füllvorgangs Kaffeemahlgut aufzunehmen, und eine Mahlgutsammeloberfläche (40), die im Bereich der oberen Öffnung (13) angeordnet ist und die das trockene Mahlgut sammelt, das beim Befüllen der Brühkammer nicht richtig in die Brühkammer geleitet wurde, wobei die Brühgruppe (10) einen Druckkolben (14) aufweist, der zwischen einer oberen Rückzugsposition, in der das Mahlgut in die Brühkammer (12) eingeführt werden kann, und einer unteren Verdichtungsposition, in welcher der Druckkolben (14) in der Brühkammer (12) angeordnet ist, beweglich ist, um das Mahlgut zu verdichten und nach dem Aufbrühen einen Mahlgutkuchen zu bilden, wobei die Brühgruppe (10) eine Vorrichtung (20) zum Ausstoßen des Mahlgutkuchens aufweist, die mit einem Ausstoßarm (25) versehen ist, der über der oberen Öffnung (13) hin- und herbewegbar ist, um den Mahlgutkuchen abzulassen, der Ausstoßarm (25) ein Abstreifelement (30) für die Mahlgutsammeloberfläche (40) aufweist, **dadurch gekennzeichnet, dass** das Abstreifelement (30) mindestens eine flexible Lippe (31) aufweist, und dass die Mahlgutsammeloberfläche (40) eine horizontale Oberfläche (41) und eine vertikale Oberfläche (42) aufweist, die sich von der horizontalen Oberfläche (41) erstreckt, wobei die mindestens eine flexible Lippe (31) einen horizontalen Abschnitt (32), der zum Reinigen der horizontalen Oberfläche (41) bestimmt ist, und einen vertikalen Abschnitt (33) aufweist, der zum Reinigen der vertikalen Oberfläche (42) bestimmt ist.

2. Automatische Kaffeemaschine (1) nach Anspruch 1, **dadurch gekennzeichnet, dass** der Ausstoßarm (25) drehbeweglich ist und dass der Ausstoßarm (25) ein Antriebsende (26) aufweist, das mit einem mit dem Druckkolben (14) fest verbundenen Nocken (24) zusammenwirkt, und ein freies Ende (28), welches das Abstreifelement (30) aufweist.

3. Automatische Kaffeemaschine (1) nach einem der Ansprüche 1 bis 2, **dadurch gekennzeichnet, dass** die flexible Lippe (31) einen Biegeabschnitt (37) aufweist, der eine programmierte Biegezone der flexiblen Lippe (31) bildet.

4. Automatische Kaffeemaschine (1) nach Anspruch 3, **dadurch gekennzeichnet, dass** das Abstreifelement (30) einen mit dem Ausstoßarm (25) fest verbundenen Sockel (34) aufweist, von dem sich die flexible Lippe (31) aus erstreckt, und dass die flexible Lippe (31) zwei seitliche Verstärkungen (35, 36) aufweist, wobei der Biegeabschnitt (37) zwischen dem Sockel (34) und den beiden seitlichen Verstärkungen (35, 36) angeordnet ist.

5. Automatische Kaffeemaschine (1) nach einem der Ansprüche 1 bis 4, **dadurch gekennzeichnet, dass** die Brühgruppe (10) einen Erhitzer (16) aufweist, der die Mahlgutsammeloberfläche (40) auf eine Temperatur von über 130 Grad erwärmt, wobei das Abstreifelement (25) aus einem flexiblen, einer solchen Temperatur standhaltenden Material, insbesondere Silikon oder Polytetrafluorethylen, ausgeführt ist.

6. Automatische Kaffeemaschine (1) nach einem der Ansprüche 1 bis 5, **dadurch gekennzeichnet, dass** sie eine Kaffeemühle (50) und eine Einbringvorrichtung (55) für eine Dosis Mahlgut aufweist, wobei das durch die obere Öffnung (13) in die Brühkammer (12) eingeführte Mahlgut entweder aus der Kaffeemühle (50) oder aus der Einbringvorrichtung (55) für eine Dosis Mahlgut stammt.

7. Automatische Kaffeemaschine (1) nach einem der Ansprüche 1 bis 6, **dadurch gekennzeichnet, dass** sie mindestens eine Zuführrinne (51, 57) für Mahlgut aufweist und dass die Zuführrinne (51, 57) über der Mahlgutsammeloberfläche (40) angeordnet ist

8. Automatische Kaffeemaschine (1) nach einem der Ansprüche 1 bis 7, **dadurch gekennzeichnet, dass** sie eine Aufnahmeleitung (5) für das von der Mahlgutsammeloberfläche (40) durch das Abstreifelement (30) abgelassene Mahlgut aufweist.

9. Automatische Kaffeemaschine (1) nach einem der Ansprüche 1 bis 8, **dadurch gekennzeichnet, dass** die Brühgruppe (10) eine Vorrichtung (20) zum Ausstoßen des Mahlguts im Bereich der oberen Öffnung (13) aufweist, wobei die Ausstoßvorrichtung (20) eine innerhalb der Brühkammer (12) bewegliche Platte (21) aufweist, die zwischen einer unteren Arbeitsstellung, in der sie den Boden der Brühkammer (12) bildet, und einer oberen Ausstoßstellung, in der sie im Bereich der oberen Öffnung (13) der Brühkammer (12) angeordnet ist, beweglich ist, um den Mahlgutkuchen in eine Abtastzone des Ausstoßarms (25) zu befördern.

## Claims

1. Automatic coffee machine (1) comprising an infusion unit (10) which comprises an infusion chamber (12) equipped with an upper opening (13) intended to receive coffee grounds during a filling operation and a grounds recovery surface (40) arranged at the upper opening (13) and which recovers the dry grounds which is not actually directed into the infusion chamber during the operation of filling the infusion chamber, said infusion unit (10) comprising a pressing plunger (14) which is movable between high removal position in which the grounds can be introduced into said infusion chamber (12) and a low compaction position in which the pressing plunger (14) is arranged in the infusion chamber (12) to compact the grounds and form a slab of grounds after infusion, said infusion unit (10) comprising a device (20) for expelling the slab of grounds which is equipped with an ejecting arm (25) driven by an alternative movement above the upper opening (13) to drain the slab of grounds, the ejecting arm (25) comprises a scraping member (30) of the grounds recovery surface (40), **characterised in that** said scraping member (30) comprises at least one flexible lip (31), and **in that** the grounds recovery surface (40) comprises a horizontal surface (41) and a vertical surface (42) which extends from the horizontal surface (41), the at least one flexible lip (31) comprising a horizontal portion (32) intended to clean the horizontal surface (41) and a vertical portion (33) intended to clean the vertical surface (42).

2. Automatic coffee machine (1) according to claim 1, **characterised in that** the ejecting arm (25) is rotatably movable, and **in that** the ejecting arm (25) comprises a drive end (26) which engages with a cam (24) secured to the pressing plunger (14) and a free end (28) which comprises the scraping member (30).

3. Automatic coffee machine (1) according to any one of claims 1 to 2, **characterised in that** the flexible lip (31) comprises a bending portion (37) forming a programmed bending zone of the flexible lip (31).

4. Automatic coffee machine (1) according to claim 3, **characterised in that** the scraping member (30) comprises a baseplate (34) secured to the ejecting arm (25) from which the flexible lip (31) extends, and **in that** the flexible lip (31) comprises two side reinforcements (35, 36), the bending portion (37) being arranged between the baseplate (34) and the two side reinforcements (35, 36).

5. Automatic coffee machine (1) according to any one of claims 1 to 4, **characterised in that** the infusion unit (10) comprises a hot water tank (16) which carries the grounds recovery surface (40) at a temperature greater than 130 degrees, the scraping member (25) being made of a flexible material supporting such a temperature, in particular, silicone or polytetrafluoroethylene.

6. Automatic coffee machine (1) according to any one of claims 1 to 5, **characterised in that** it comprises a bean grinder (50) and a device (55) for inserting a dose of grounds, the grounds introduced into the infusion chamber (12) through the upper opening (13) either coming from the bean grinder (50), or from the device (55) for inserting a dose of grounds.

7. Automatic coffee machine (1) according to any one of claims 1 to 6, **characterised in that** it comprises at least one grounds chute (51, 57), and **in that** the chute (51, 57) is arranged above the grounds recovery surface (40).

8. Automatic coffee machine (1) according to any one of claims 1 to 7, **characterised in that** it comprises a conduit (5) for receiving the drained grounds from the grounds recovery surface (40) by the scraping member (30).

9. Automatic coffee machine (1) according to any one of claims 1 to 8, **characterised in that** the infusion unit (10) comprises a device (20) for expelling the slab of grounds at the upper opening (13), said expulsion device (20) comprising a plate (21) which is movable inside the infusion chamber (12) between a low working position, in which it forms the bottom of the infusion chamber (12) and a high expulsion position, in which it is arranged at the upper opening (13) of the infusion chamber (12) to bring the slab of grounds into a sweeping zone of the ejecting arm (25).
